(19) Europäisches Patentamt
European Patent Office
Office européen des brevets

(11) EP 4 592 951 A1

(12) EUROPEAN PATENT APPLICATION

(43) Date of publication:
**30.07.2025 Bulletin 2025/31**

(21) Application number: **24305151.3**

(22) Date of filing: **29.01.2024**

(51) International Patent Classification (IPC):
***G06T 7/11*** *(2017.01)* ***G06T 15/08*** *(2011.01)*

(52) Cooperative Patent Classification (CPC):
**G06T 7/11; G06T 15/08;** G06T 2207/10072; G06T 2207/20221; G06T 2207/30101

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Dassault Systèmes**
**78140 Vélizy-Villacoublay (FR)**

(72) Inventors:
- **NDOKO, Arthur**
  **78140 Vélizy-Villacoublay (FR)**
- **ROULLET, Agathe**
  **78140 Vélizy-Villacoublay (FR)**

(74) Representative: **Bandpay & Greuter**
**11 rue Christophe Colomb**
**75008 Paris (FR)**

# (54) SINGLE RENDERING OF SETS OF MEDICAL IMAGES

(57) The disclosure notably relates to a computer-implemented method for single rendering at least two sets of medical images of a patient. The at least two sets of medical images cover an area of the patient. The method comprises obtaining (S10) the at least two sets of medical images. Each set of medical images covers one or more respective regions of interest. The method comprises extracting (S20) the one or more respective regions of interest of each of the obtained at least two sets of medical images. The method comprises assembling (S30) the extracted respective regions of interest into a single set of images. Such a method forms an improved solution for single rendering sets of medical images.

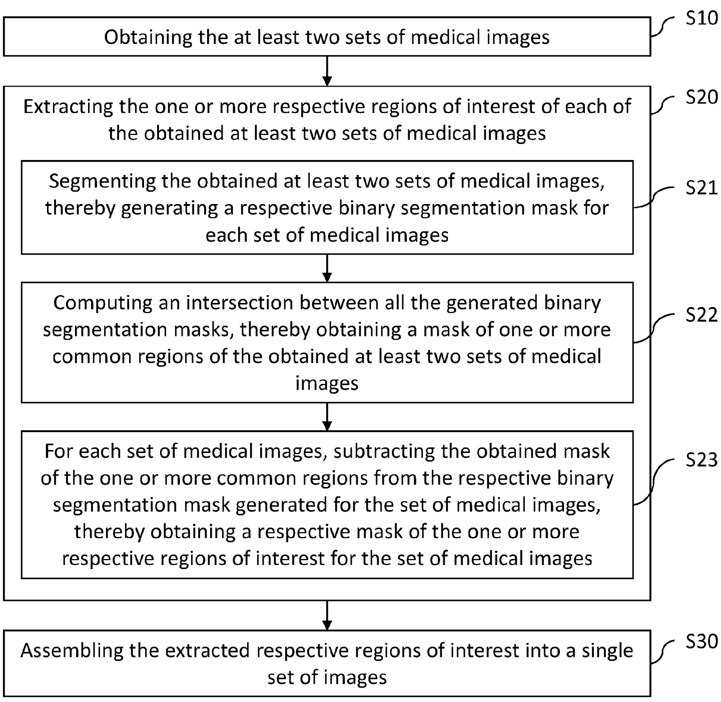


FIG. 1



Processed by Luminess, 75001 PARIS (FR)

## Description

### TECHNICAL FIELD

The disclosure relates to the field of computer programs and systems, and more specifically to a method, system and program for single rendering at least two sets of medical images of a patient.

### BACKGROUND

The use of several sets of medical images to cover the same area of a patient is now very common in medical applications. For example, in the case of a Computed Tomography Scan (CT-scan), radiologists can observe certain types of structures on the CT-scan before and after an injection of contrast agents in the body. In that case, the medical imaging examination may comprise the acquisition of a first set of medical images before the injection of contrast agents, and the acquisition of a second set of medical images after the injection of contrast agents, thereby producing two sets of medical images covering the same area of the patient. They are notably different way to inject radiocontrast, such as intravenously, orally or rectally. In oncology for example, the injection of the contrast agent is mainly made into the blood veins.

Individually, each acquired set of medical images can be visualized in 3D using a standard volume rendering algorithm. For example, the standard volume rendering algorithm called "ray casting" can be used for rendering a CT-scan. In this algorithm, the density values of the CT-scan are mapped to color and opacity values using look-up tables. These look-up tables depend on the tissues that are meant to be visible.

The main issue is that the different sets of medical images covering the same area (e.g., acquired during the different phases of the CT-scan) may reveal different anatomical structures in the volume rendering. For some applications such as surgery planning or communication with the patient, it is therefore useful to see all these anatomical structures in a single view. However, known standard volume rendering algorithms are unable to calculate a usable rendering of different sets of medical images in a single view.

Within this context, there is still a need for an improved solution for single rendering sets of medical images.

### SUMMARY

It is therefore provided a computer-implemented method for single rendering at least two sets of medical images of a patient. The at least two sets of medical images cover an area of the patient. The method comprises obtaining the at least two sets of medical images. Each set of medical images covers one or more respective regions of interest. The method comprises extracting the one or more respective regions of interest of each of the obtained at least two sets of medical images. The method comprises assembling the extracted respective regions of interest into a single set of images.

The method may comprise one or more of the following:

- the extracting (S20) comprises:

  o segmenting (S21) the obtained at least two sets of medical images, thereby generating a respective preliminary binary segmentation mask for each set of medical images;
  o computing (S22) an intersection between all the generated preliminary binary segmentation masks, thereby obtaining a common mask of one or more common regions of the obtained at least two sets of medical images; and
  o for each set of medical images, subtracting (S23) the obtained common mask from the respective preliminary binary segmentation mask generated for the set of medical images, thereby obtaining a respective final binary segmentation mask of the one or more respective regions of interest for the set of medical images;

- the computing (S22) of the intersection is based on the following formula:

$$M^{Common} = \prod_{k \in \{0,\ldots,\#series-1\}} M_k^{ROI+Common}$$

  wherein $M^{Common}$ is the common mask and, for each set of medical images labelled $k$ among the set of labels {0, ..., *#series* - 1}, $M_k^{ROI+Common}$ is the generated preliminary respective binary segmentation mask;
- the subtracting (S23) is based on the following formula: $\forall k \in \{0, \ldots, \#series - 1\}$,

$M_k^{ROI} = M_k^{ROI+Common} \times (1 - M^{Common})$ wherein $M^{Common}$ is the common mask and, for each set of medical images labelled *k* among the set of labels {0, ..., *#series*}, $M_k^{ROI+Common}$ is the generated respective preliminary binary segmentation mask and $M_k^{ROI}$ is the obtained respective final binary segmentation mask;

- the single set of images defines a voxel grid, the assembling (S30) comprising assigning a respective value to each voxel of the voxel grid by performing, for each voxel:

  o determining whether the voxel belongs to one of the respective regions of interest of one of the at least two sets of medical images; and
  o if the voxel belongs to one of the respective region of interest, assigning a respective value to the voxel according to the set of medical images from which the respective mask having the respective region of interest to which the voxel belongs is obtained;

- the obtaining of the at least two sets of medical images further comprises obtaining a set of labels each corresponding to a respective set of medical images;
- the assigning of the respective value comprises assigning the respective label associated to the set of medical images having the respective region of interest to which the voxel belongs;
- the assigning of the respective value comprises assigning the respective value equal to a value in a corresponding location of the set of medical images having the respective regions of interest to which the voxel belongs;
- the respective value assigned to the voxel is equal to the result of an addition of:

  o a value in a corresponding location of the set of medical images having the respective regions of interest to which the voxel belongs; and
  o an offset which depends on the set of medical images having the respective regions of interest to which the voxel belongs;

- the assembling is based on the following formula:

$$V^{fusion} = V_0 \prod_{k=0}^{\#series-1} 1 - M_k^{ROI} + \sum_{k=0}^{\#series-1} M_k^{ROI}(V_k + \delta_{distinctive} kt)$$

wherein $V^{fusion}$ is the single set of images, $V_k$ is the set of medical images labelled *k* among the set of labels {0, ..., *#series* - 1}, $V_0$ is a reference set of medical images in which the regions of interest from other sets of medical images are added, 1 is an indicator function, $M_k^{ROI}$ is the respective final binary segmentation mask of regions of interest for the set of medical images labelled *k* among the set of labels {0, ..., *#series* - 1}, $\delta_{distinctive}$ is a parameter equal to 1 for a distinctive mode and 0 for a blended mode, *kt* is the offset resulting from the multiplying of the value of the label *k* and a parameter t;
- the method further comprising, prior to the extracting:

  o aligning the at least two sets of medical images, the extracting being performed on the aligned at least two sets of medical images; and/or

- the at least two sets of medical images include:

  o at least one set of medical images acquired preferably by a CT-scanner at a non-enhanced phase;
  o at least one set of medical images acquired preferably by the CT-scanner at arterial phase, the arterial phase being preferably from 25 to 50 seconds after injecting contrast material, preferably from 35 to 40 seconds after the injecting of the contrast material; and/or
  o at least one set of medical images acquired preferably by the CT-scanner at portal venous phase, the portal venous phase being preferably from 60 to 90 seconds after injecting contrast material, preferably from 70 to 80 seconds after the injecting of the contrast material.

It is further provided a computer program comprising instructions for performing the method.
It is further provided a computer readable storage medium having recorded thereon the computer program.
It is further provided a system comprising a processor coupled to a memory, the memory having recorded thereon the computer program.
The system may further comprise a viewer. The viewer may comprise a graphical user interface configured for displaying the single set of images.
It is further provided a device comprising a data storage medium having recorded thereon the computer program. The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a viewer. The viewer may comprise a graphical user interface configured for displaying the single set of images.

## BRIEF DESCRIPTION OF THE DRAWINGS

Non-limiting examples will now be described in reference to the accompanying drawings, where:

- FIG. 1 shows a flowchart of an example of the method;
- FIG. 2 shows an example of the single set of images;
- FIG. 3 shows an example of Hounsfield scale of CT scan;
- FIG. 4 shows an example of the assembling of the extracted respective regions of interest into the single set of images;
- FIG. 5 illustrates another flowchart of an example of the method;
- FIG. 6 illustrates a flowchart of an example of the extracting of the regions of interest and the assembling of the extracted regions of interest into the single set of medical images;
- FIGs. 7 and 8 show examples of the single rendering generated by the method;
- FIGs. 9, 10 and 11 illustrate examples of the transfer function; and
- FIG. 12 shows an example of the system.

## DETAILED DESCRIPTION

With reference to the flowchart of FIG. 1, it is proposed a computer-implemented method for single rendering at least two sets of medical images of a patient. The at least two sets of medical images cover an area of the patient. The method comprises obtaining S10 the at least two sets of medical images. Each set of medical images covers one or more respective regions of interest. The method comprises extracting S20 the one or more respective regions of interest of each of the obtained at least two sets of medical images. The method comprises assembling S30 the extracted respective regions of interest into a single set of images.
Such a method forms an improved solution for single rendering sets of medical images.
Notably, the method allows rendering the at least two sets of medical images of the patient in a single view. In particular, the single rendering computed by the method is particularly useful. Indeed, the method allows rendering the different regions of interest of each set of medical images in a single rendering. This single rendering is therefore particularly useful for applications such as surgery planning or communication with the patient. Indeed, it enables all the anatomical structures located in/constituting the regions of interest specific to each set of medical images to be seen in a single view.
Moreover, the method is particularly efficient in terms of calculation and the unique rendering particularly exhaustive. Indeed, firstly, the respective regions of interest of each set of medical images are extracted, and then, these extracted regions of interest are assembled for forming the resulting single set of images. Thus, it allows incorporating efficiently and accurately all the regions of interest that are covered in the different sets of medical images taken as input. In particular, the method allows achieving this single rendering in a computer-automated way, whatever the sets of medical images considered as input.
The method is for single rendering at least two sets of medical images of a patient. It may comprise a volume synthesis step consisting in producing a single set of medical images (i.e., only one set) from several sets of medical images. It enables all the regions of interest revealed by the several sets of medical images to be visualized into a single visualization.
The method may then comprise rendering and displaying this produced single set of medical images (e.g., using a 3D viewer as explained in the following) so that a medical practitioner (e.g., a doctor or nurse) may study the patient's area, or they may show it to the patient.
The method is computer-implemented. This means that steps (or substantially all the steps) of the method are executed by at least one computer, or any system alike. Thus, steps of the method are performed by the computer, possibly

fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

In examples, the method may comprise, after the assembling S30, rendering the single set of images. For example, the rendering of the single set of images may comprise applying an algorithm for volume rendering (referred to as "volume rendering algorithm" in the following) to the single set of images so as to obtain data that may be visualized in 2D for display on a screen (e.g., using a standard viewer). The volume rendering algorithm may be a known standard volume rendering algorithm (e.g., an algorithm implementing ray casting or maximum intensity projection). Indeed, the data structure of the single set of images may be the same as the data structure of each set of medical images taken as input by the method. For example, the single set of images may define a voxel grid comprising voxels each associated to a value.

Prior to the applying of the volume rendering algorithm, the method may comprise assigning respective color and opacity values to each voxel of the single set of images according to the value associated to the voxel in the single set of images. The assigning of the color and opacity values may be performed in any manner, e.g., using transfer function(s) or look-up table(s). The transfer function(s) or look-up table(s) may be used for mapping intensity values from the acquisition (e.g., HU for CT scans) to graphical/visual properties (color vector and opacity as a minimum) to enable a desired graphical rendering. The functions may be defined by hand, for example, so that the desired tissues may be seen and distinguished when they correspond to intensity ranges.

The volume rendering algorithm may be applied to the resulting voxel grid (i.e., that includes the respective color and opacity values assigned to each voxel), and may be configured for projecting these 3D data into a 2D representation. The result may then be visualized using a 3D viewer. For example, the method may further comprise displaying the obtained 2D representation on a screen.

Volume rendering designates the process of generating a 2D image corresponding to a view of a 3D scene when the underlying geometry of the scene is densely represented by 3D matrix (i.e., a voxel grid) whose values describe the local appearance properties of the volume. Common volume rendering algorithms include the ray casting or the maximum intensity projection algorithms. Volume rendering differs from surface rendering, which rather designates the process of generating a 2D image corresponding to a view of a 3D scene when the underlying geometry of the scene is sparsely represented by the surfaces of the objects it contains. These surfaces are usually decomposed into tileable primitives (triangles, quads) forming so-called meshes. Common surface rendering algorithms include the rasterization or the ray tracing algorithms. Contrary to surface rendering, volume rendering enables to account for opacity variations along the depth of the scene's elements. By allowing performing a volume rendering of the distinctive areas, the method therefore improves visualization of the area of the patient.

In examples, the method may comprise using the single set of images for preparing a surgery for the patient. For example, the method may be included in a surgery preparation process, which may comprise, after performing the method, preparing the surgery for the patient based on the single set of images. The preparing of the surgery may comprise displaying the single set of images and determining the surgical operations to be performed based on the displayed single set of images (e.g., identifying the areas to be treated, determining the operations to be performed on these areas and/or determining the tool paths to be used to perform these operations). Alternatively or additionally, the method may comprise using the single set of images for communicating with the patient. For example, the method may comprise displaying the single set of images to the patient (e.g., using a 3D viewer as explained above) so that a medical practitioner (e.g., a doctor or nurse) may explain a condition visible in the displayed single set of images to the patient. By enabling the grouped rendering of different sets of medical images, the method also improves surgical preparation and/or patient communication. Indeed, it allows seeing all the anatomical structures revealed in the different sets of medical images in a single view, which is particularly useful for preparing a surgical procedure and/or communicating with a patient.

The obtaining S10 of the at least two sets of medical images may comprise acquiring the at least two sets of medical images. For example, each set of medical images may be acquired by a CT-scanner or any other imaging medical device such as a Magnetic Resonance Imaging (MRI) scanner. In that case, the obtaining S10 may comprise the acquisition of the at least two sets of medical images using the CT-scanner or the other imaging medical device. Alternatively, the at least two sets of medical images may already have been acquired at the time the method is executed (e.g., using a CT-scanner). In that case, the obtaining S10 may comprise retrieving the already acquired at least two sets of medical images. For example, the at least two sets of medical images may have been recorded on a memory, and the obtaining S10 may comprise retrieving from the memory the acquired at least two sets of medical images.

The at least two sets of medical images provided in input (S10) may have been acquired successively. For

example, at least two sets of medical images may have been acquired at different phases during a medical imaging examination, as known. For examples, the medical imaging examination may include an injection of a contrast material (e.g., as described in https://radiologyassistant.nl/more/ct-protocols/ct-contrast-injection-and-protocols and/or in https://radiopaedia.org/articles/contrast-phases). In that case, the at least two sets of medical images may have been acquired (i.e., by the CT-scanner or the other imaging medical device) at different phases distributed before and/or after the injection of the contrast material. For example, the at least two sets of medical images may include one or more sets of medical images acquired before the injection of the contrast material and one or more sets of medical images acquired after the injection of the contrast material. Before or after the injection means that each set may have been acquired without or with a presence of the contrast material in the body of the patient. The contrast material may be absent from the body of the patient before the injection and may be present after the injection (e.g., with a presence rate that varies as a function of time after the start of the injection).

In examples, the at least two sets of medical images may include at least one set of medical images acquired at a non-enhanced phase. The contrast material may not have been injected into the patient during this phase. For example, the medical imaging examination may not include an injection of a contrast material, or the injection of a contrast material may not yet have been performed. Alternatively or additionally, the at least two sets of medical images may include at least one set of medical images acquired at arterial phase. The arterial phase may be after the injection of the contrast material. The arterial phase may be from 25 to 50 seconds after the injecting of the contrast material (i.e., after the start of the injection). For example, the arterial phase may be from 35 to 40 seconds after the injecting of the contrast material. Alternatively or additionally, the at least two sets of medical images may include at least one set of medical images acquired at portal venous phase. The portal venous phase may be from 60 to 90 seconds after the injecting of the contrast material. For example, the portal venous phase may be from 70 to 80 seconds after the injecting of the contrast material.

Any set of medical images is now discussed. The use of such a set of medical images is well known. For example, it is known that a scanner-type examination may involve taking medical images regularly along (e.g., a part of) the patient's body, each representing a slice of the patient's body. Assembled together, these medical images may then be used to reconstruct, slice by slice, a 3D volume representing (e.g., the part of) the patient's body. The medical images of the set may thus together represent a 3D volume that includes the area of the patient. Each medical image may be a 2D image and may represent a respective slice along this 3D volume represented by the set. The 3D volume may thus be formed by assembling the successive slices represented by the different medical images of the set.

The set of medical images may define a voxel grid. This voxel grid may be aligned with a longitudinal direction of the area of the patient. The voxel grid may comprise layers of voxels superimposed on one another along this longitudinal direction. Each voxel layer may comprise the voxels of the grid that are located at a same position along the longitudinal direction. Each voxel layer may represent a respective slice of the 3D volume represented by the set. Each medical image of the set may be perpendicular to this longitudinal direction. Each voxel may have a value which is defined by the set of medical images. In particular, each medical image may define the values of the voxels belonging to the voxel layer that is located at the same position along the longitudinal direction than the medical image. When the voxel layer and the medical image are superimposed, each voxel may have a value that corresponds to that in the portion of the medical image that the voxel includes.

When acquired by a CT-scanner, the medical images of the set may be produced by sending X-rays through the human body. A resulting signal may be read and analyzed to reconstruct a dense volume of the body. In that case, the values of the voxel that are defined by the set of medical images may be Hounsfield Unit (HU) values. The HU may be a relative quantitative measurement of radio density used by radiologists in the interpretation of computed tomography (CT) images.

Each set of medical images covers an area (i.e., section or portion) of the patient. This means that each set images the said area of the patient. In other words, the area of the patient is represented in at least a portion (e.g., all) of the medical images of each set. The area covered by the at least two sets of medical images may be any area of the body of the patient. For example, the area of the body may include partially or totally the head, the neck, the trunk (thorax, abdomen and pelvis), one or both of the upper limbs and/or one or both of the lower limbs. The area is a common area that each of the at least two sets of medical images cover. It means that each set of medical images may also covers another area of the body of the patient, but each of the at least two sets of medical images cover at least this common area. Here the term area is synonymous of the term part, e.g., each set of medical images covers a part of the patient.

Each set of medical images covers one or more respective regions of interest. The one or more respective regions of interest are included in the area of the body of the patient covered by each set of medical images. Each region of interest may be a respective portion of this area of the patient's body. The regions of interest may each be any type of region of the human body that may be targeted by a type of medical imaging (i.e., whose appearance, content and/or shape can be revealed by this medical imaging). The regions of interest may include any one or any combination of the regions of the human body indicated in the website page https://www.radiologvinfo.org/en/info/safety-contrast. For example, the regions of interest may include one or more (e.g., portion of) internal organs such as brain, breasts, heart, lungs, liver, adrenal glands, kidneys, pancreas, gallbladder, spleen, uterus, and/or bladder. Alternatively or additionally, the regions of interest

may include the gastrointestinal tract, e.g. including stomach, small intestine and/or large intestine. Alternatively or additionally, the regions of interest may include one or more arteries and veins of the body, including vessels in the brain, neck, chest, abdomen, pelvis and/or legs. Alternatively or additionally, the regions of interest may include one or more other parts of the body including muscle and/or bone.

Preferably, the regions of interest may be areas of the body that can be enhanced by contrast media. For example, regions of interest may include arteries, veins, intestine, stomach, urinary tract, tumor(s) and/or bladder.

Each set of medical images may cover one or more respective regions of interest among all of the possible regions of interest listed above. These one or more respective regions of interest may only be covered by one of the sets of medical images. The one or more respective regions covered by each set may depend on the phase at which the set is acquired. For example, for a set of medical images acquired at the non-enhanced phase, the one or more respective regions may be those not revealed by the presence of the contrast material. On the contrary, for a set of medical images acquired at the arterial or venous phase, the one or more respective regions may be those revealed thanks to the injecting of the contrast material (and notably later for the venous phase). Each set of medical images may also cover one or more common regions (i.e., covered in at least two sets of medical images). In other words, the one or more common regions are the portion(s) that are not specifically revealed by a single set of medical images (i.e., everything that is not in the respective regions of interest). The one or more common regions may be those revealed irrespective of whether or not the contrast material is present in the body. For example, the one or more common regions may include every bone present in the area of the patient's body covered by at least two sets of medical images.

For each of the at least two sets of medical images, the extracting S20 of the one or more respective regions of interest may be performed in any manner. The extracting S20 may be performed based on any segmentation of the set of medical images. For example, the extracting S20 may be performed manually by a medical practitioner (e.g., a doctor or nurse). For each set of medical images, the extracting S20 may comprise displaying the set of medical images (e.g., each medical image successively) and selecting, through user interaction, the one or more respective regions of interest covered by the set of medical images (e.g., by defining the outline of each region of interest on each medical image). The result of the segmentation is, for each set of medical images, a respective final binary segmentation mask.

Alternatively, the extracting S20 may be performed automatically or semi-automatically. For example, the extracting S20 may comprise segmenting S21 the obtained at least two sets of medical images, thereby generating a respective preliminary binary segmentation mask for each set of medical images. The generated respective preliminary binary segmentation mask may also define a voxel grid. The voxel grid defined by the generated respective preliminary binary segmentation mask may have the same spatial layout as that defined by the set of medical images, except that the values inside the voxel grid may be of binary type (e.g., "0" or "1"). The binary value may define whether the corresponding voxel of the grid defined by the set of medical images (i.e., at the same location of the area of the patient's body) belongs to a region of interest. For example, the binary value may define whether the value in this corresponding voxel is above or below a predetermined threshold marking its belonging to a region of interest (e.g., 300 HU for a CT-scan). The segmenting S21 of each set of medical images may be performed in any manner. The segmenting S21 may comprise assigning binary values to a voxel grid according to the values of the set of medical images (this voxel grid having same dimensions than that defined by the set of medical images). For example, the segmenting S21 may comprise determining an empty voxel grid having same dimensions than that defined by the set of medical images but no value, and, for each voxel in this empty voxel grid, determining whether the value in the corresponding voxel of the grid defined by the set of medical images is below or above the predetermined threshold and assigning a binary value to the voxel accordingly (e.g., the value "0" when the value is above the predetermined threshold and "1" otherwise). The resulting voxel grid may be the respective preliminary binary segmentation mask computed for this set of medical images.

After the segmenting S21, the extracting S20 may comprise computing S22 an intersection between all the generated preliminary binary segmentation masks, thereby obtaining a common mask of one or more common regions of the obtained at least two sets of medical images. The common mask may be computed when the preliminary binary segmentation masks in the previous step contains both the region of interest specific to the at least two sets and regions of interest common to all sets (e.g., for the bones). This may happen, for example, when performing a thresholding segmentation.

In examples, the computing S22 of the intersection may be executed by computing the intersection of all the generated respective preliminary binary segmentation masks. For example, the computing S22 of the intersection may be based on the following formula:

$$M^{Common} = \prod_{k \in \{0, \dots, \#series-1\}} M_k^{ROI+Common}$$

wherein $M^{Common}$ is the common mask and, for each set of medical images labelled $k$ among the set of labels $\{0, \dots, \#series$

- 1}, $M_k^{ROI+Common}$ is the generated respective preliminary binary segmentation mask. The multiplication $\Pi$ may be an element-wise multiplication. This formula may be applied during the computing S22 and may involve, for each voxel position, multiplying the values of all the respective binary segmentation masks in this voxel position and assigning the result of this multiplication to the same voxel position in the common mask. For each voxel position at which all the respective preliminary binary segmentation masks have a value of "1", this results in a value of "1" at the same voxel position in the common mask, and otherwise a value of "0".

After the computing S22, the extracting S20 may comprise, for each set of medical images, subtracting S23 the obtained common mask of common regions from the respective preliminary binary segmentation mask generated for the set of medical images, thereby obtaining a respective final binary segmentation mask of the one or more respective regions of interest for the set of medical images. The respective final binary segmentation mask is the result of the difference S23 (in the sense of set theory) of the common mask and the respective preliminary binary segmentation mask. In other words, the respective final binary segmentation mask may define a voxel grid whose values are "1" for the voxels holding the value "1" in the respective binary segmentation mask and "0" in the common mask, and "0" elsewhere. The values of the respective mask may represent only the one or more regions of interest of the set of medical images (i.e., not the one or more common regions).

In examples, the subtracting S23 may be based on the following formula:

$$\forall k \in \{0, \ldots, \#series - 1\}, \qquad M_k^{ROI} = M_k^{ROI+Common} \times (1 - M^{Common})$$

wherein $M^{Common}$ is the common mask and, for each set of medical images labelled $k$ among the set of labels {0, ..., *#series*}, $M_k^{ROI+Common}$ is the generated respective preliminary binary segmentation mask and $M_k^{ROI}$ is the obtained respective final binary segmentation mask. In this formula, 1 may be a voxel grid having same dimensions but containing only positive binary values (i.e., "1") and the operator $\times$ may denote an element wise multiplication.

The assembling S30 may consist in determining the single set of images. The determining of the single set of images may comprise determining a voxel grid (i.e., the one that the single set of images defines) and assigning values to this voxel grid according to the extracted respective regions of interest. The voxel grid defined by the single set of images may have same dimensions than that defined by the at least two sets of medical images. The assembling S30 may comprise assigning values to this voxel grid so as to identify the respective regions of interest of the at least two sets of medical images. For example, the method may comprise modifying the values from the extracted respective regions of interest so that they are included in distinct ranges of intensities. In that case, each of the ranges of intensities is associated with a unique region of interest.

In examples, the assigning of the respective value may be performed voxel by voxel. The assigning of the respective value to each voxel of the voxel grid may comprise performing, for each voxel, determining whether the voxel belongs to one of the respective regions of interest of one of the at least two sets of medical images, and assigning a respective value to this voxel accordingly. For example, if the voxel belongs to one of the regions of interest, the method may comprise assigning to the voxel the value of the voxel at the corresponding location in the voxel grid defined by one of the sets of medical images. This set of medical images is the one associated with the region of interest in which the voxel is located. Otherwise, if the voxel does not belong to one of the respective regions of interest, the method may comprise assigning the value of the voxel at the corresponding location in the set of medical images selected as reference (the method may include a step of selecting of the set of medical images considered as reference among the at least two sets of medical images).

Different methods for assigning values to voxels belonging to regions of interest are now discussed (referred to as "assigning methods" in the following). The method may use any one of these assigning methods.

A first assigning method may comprise assigning same labels to voxels that belong to same set of medical images. In that case, the first assigning method may consider a set of labels each corresponding to a respective set of medical images. Each label of the set may be associated to a respective one of the at least two sets of medical images. In this first assigning method, the value that is assigned to each voxel may be the respective label associated to the set of medical images having the respective region of interest to which the voxel belongs. For example, each set of medical images may be associated to a respective number (e.g., a positive integer n), and the value that is assigned may be equal to the respective number associated to the set of medical images having the respective region of interest to which the voxel belongs. Then, the method may comprise the displaying of the resulting single set of images by applying a volume rendering algorithm as detailed above (e.g., using a specific transfer function). This first assigning method therefore allows highlighting the regions of interest of the different sets of medical images. For example, it allows highlighting different organs when they are revealed in different sets of medical images.

A second assigning method may comprise assigning same values as in corresponding locations in the respective

regions of interest to which the voxels belong (i.e., for each voxel, in the set of medical images that includes the respective region of interest to which the voxel belongs). In that case, the method may comprise assigning each voxel with the value of the voxel at the corresponding location in the voxel grid defined by the set of medical images associated with the region of interest that the voxel belongs to according to the respective masks. For example, for each voxel, after the determining of whether the voxel belongs to one of the respective regions of interest of one of the at least two sets of medical images, the method may comprise assigning a respective value to the voxel equal to the one in a corresponding location of the set of medical images having the respective regions of interest to which the voxel belongs. The corresponding location may be the same voxel position in the voxel grids that the set of medical images and the single set of images define. This second assigning method therefore allows accurately reproducing the nuances of the values obtained in the different sets of medical images. In particular, it allows assembling the values of the different sets cleanly, since only the value of the region(s) of interest highlighted by each set is retained, and thus to avoid unnecessarily and inaccurately adding up the values in these areas (as would be the case if the values of all the sets were simply added together everywhere).

According to a third assigning method, the respective value assigned to the voxel may be equal to the result of an addition of a value in a corresponding location and of an offset. The added value may the value of the set of medical images having the respective regions of interest to which the voxel belongs (as in the second method). The offset may depend on the set of medical images having the respective regions of interest to which the voxel belongs. This third assigning method allows combining the advantages of both the first and second assigning methods, i.e., allows highlighting the regions of interest of the different sets of medical images and also reproducing the nuances of the values. More generally, this allows volume rendering to be performed with transfer functions specific to each set of images.

In examples, for the second and third assigning methods, the assembling may be based on the following formula:

$$V^{fusion} = V_0 \prod_{k=0}^{\#series-1} 1 - M_k^{ROI} + \sum_{k=0}^{\#series-1} M_k^{ROI}(V_k + \delta_{distinctive} kt)$$

wherein $V^{fusion}$ is the single set of images, $V_k$ is the set of medical images labelled $k$ among the set of labels $\{0, \ldots, \#series - 1\}$, $V_0$ is a reference set of medical images in which the regions of interest from other sets of medical images are added, $M_k^{ROI}$ is the respective final binary segmentation mask of regions of interest for the set of medical images labelled $k$ among the set of labels $\{0, \ldots, \#series - 1\}$, $\delta_{distinctive}$ is a parameter, $kt$ is the offset resulting from the multiplying of the value of the label $k$ and a parameter $t$. For the second assigning method, the parameter $\delta_{distinctive}$ may be equal to 0 so as to stay in the original range of intensity values. For the third assigning method, the parameter $\delta_{distinctive}$ may be equal to 1, such that each region of interest is associated with a new and distinct range of intensity values.

In examples, the method may further comprise, prior to the extracting, aligning the at least two sets of medical images. In that case, the extracting may be performed on the aligned at least two sets of medical images. The aligning of the at least two sets of medical images may be performed in any manner. For example, the aligning may be performed by applying a linear transformation (translation, rotation) or nonlinear transformation to register together the at least two sets of medical images. The aim of the aligning step may be to find the transformation that minimizes the gap between the at least two sets of medical images. The aligning participates in the provision of an accurate single set of images as the sets of medical images may be taken at different phases and the patient may (at least involuntarily) move between these different phases.

In examples,, the method may be performed dynamically. For example, the sets of medical images may be acquired successively, and each time a new set of medical images is acquired, the method may comprise updating the single set of images so as to incorporate the newly acquired set of medical images. The updating may comprise the extracting of the one or more respective regions of interest of the newly acquired set of medical images and assembling these one or more respective regions of interest with the already assembled regions of interest. This allows live analysis of the produced images.

With reference to the FIGs. 2 to 12, an example of implementation of the method is now described.

Different tissues will have the same appearance in volume rendering if their density values are the same. It makes difficult to highlight differently a specific organ or tissue. For instance, highlighted regions by contrast agent and bones have the same density values. Multiphase CT-Scan exams output several image series that each contains different meaningful visual information. With known methods, it is not possible to view all of this information into a single visualization. The method allows creating a fusion of several CT-scans into a single 3D rendering to avoid the visualization of multiple 3D renderings (one for each phase).

The method aims to perform CT-scans fusion to enable the visualization of different tissues, from multiphase CT-scans, in a single view. The method aims to highlight these tissues without highlighting tissues that have similar density value to the region of interest, such as bones. It enables the visualization of the relative position of each structure. FIG. 2

shows an example of the single set of images generated by the method. The figure shows the first set of medical images 101 and the second set of medical images 102 that are considered in this example. In this example, the first and second sets of medical images 101, 102 are acquired by a CT-scanner. In particular, the first set of medical images 101 is acquired during the arterial phase and arteries are therefore visible in the first set of medical images 101. The second set of medical images 102 is acquired during the late phase and urinary tracks are therefore visible. The figure shows the single set of images 103 generated by the method and resulting from the fusion of the first and second sets of medical images 101, 102. The figure shows that the assembling performed by the method is particularly accurate because both arteries and urinary tracts are visible. In this example, the method uses the second assigning method (i.e., including only the nuances of the values).

The different regions of interest are highlighted differently. It helps the preparation of the surgery and the communication with the patient. Notably, the method overcomes the limitations of known solutions. In particular, the method allows viewing all the details of the CT-scan. For example, the method allows seeing small vessels or detect small variations in the vessel (e.g., thrombosis or blood clot). The method allows also performing a volume rendering which enables the visualization of the details of the CT-scans and the information from different phases.

Explanations of the terms used are now provided.

A CT-scan (Computed Tomography Scan) is a specific type of medical images produced by sending X-rays through the human body. The signal is read and analyzed to reconstruct a dense volume of the body.

The Hounsfield unit (HU) is a relative quantitative measurement of radio density used by radiologists in the interpretation of computed tomography (CT) images (see, e.g., https://www.ncbi.nlm.nih.gov/books/NBK547721/). FIG. 3 shows an example of Hounsfield scale of CT scan. It gives example of range corresponding to each tissue (Bones: 400-1000 HU, soft tissues: 40-80 HU, ...).

A set of medical images may be a set of CT-scan images acquired at the same time in a single acquisition. They may define a voxel grid of HU values representing a patient's anatomy.

A multiphase CT-scan is a CT-scan acquired at different time of a same medical exam. Few seconds may separate two acquisitions. Each acquisition enhances one or more respective regions of Interest (also called "ROI"), depending on the localization of the contrast agent in the body at the time of the acquisition.

A contrast material (also called contrast agent or contrast medium) is a substance used to increase the contrast of structures or fluids within the body in medical imaging. Examples of contrast material include barium, gadolinium, iodine based. HU values corresponding to regions with contrast agent can take different values depending on the concentration of contrast agent. Further details are also given for example in https://en.wikipedia.org/wiki/Contrast agent or https://www.radiologyinfo.org/en/info/safetv-contrast.

A registration is the transformation of different images of one scene into the same coordinate system. The transformation may be rigid, affine, homographic or complex large deformations and it uses gradient descent to find the best transformation.

A region of interest (ROI) is an anatomical structure that the method aims at highlighting. For example, the region of interest may be an anatomical structure comprising a contrast product.

A transfer function (also called look-up table (LUT) or colormaps) is a function configured for mapping intensity values of medical imaging volume to color and opacity values in order to enable the volume rendering.

A region undistinguishable with the ROI (called undistinguishable region) is a region whose set of intensity values overlaps with those of the ROI.

Direct volume rendering or volume rendering designates the process of generating 2D images from 3D volume data. Direct volume rendering methods require the conversion of the source volume into a 3D grid of color and opacity values thanks to a transfer function.

Ray casting is the baseline direct volume rendering algorithm. It consists in casting ray of sight from the observation position toward the volume. Color and opacity values are sampled along these rays. The color of each pixel of the resulting 2D image is obtained as a mixture of the colors of the points sampled on its associated rays of sight weighted by the opacity values.

Binary morphological opening is a mathematical operation which serves in computer vision and image processing. Opening removes small objects from the foreground of an image (see, e.g., the details provided in https://en.wikipedia.org/wiki/Opening (morphology))

Binary morphological closing is a mathematical operation which serves in computer vision and image processing. The closing removes small holes (see, e.g., the details provided in https://en.wikipedia.org/wiki/Closing (morphology)).

FIG. 4 shows an example of the assembling of the extracted respective regions of interest into the single set of images. In this example, the method comprises the obtaining S10 of two sets of medical images acquired from a CT-Scan (two CT-Scan series): a first set acquired at arterial phase $V_0$ and a second set acquired late phase $V_1$. The figure shows, for each set, the respective preliminary binary segmentation mask resulting from the segmentation S21 of the two sets. In particular, the figure shows, for each set, the binary values of the layer of the respective preliminary binary segmentation

mask which corresponds to one of the medical images of the set. The layer 110 corresponds to the first set and the layer 120 corresponds to the second set.

The figure also shows the respective regions of interest $M_0^{ROI}$ 114 of the first set and the respective regions of interest $M_1^{ROI}$ 124 of the second set extracted by the method. In particular, the extracting S20 comprises the segmenting S21 of each set for generating the respective preliminary binary segmentation masks 110 and 120 and the computing S22 of the intersection 132 between the two respective preliminary binary segmentation masks 110 and 120. Then, the extracting S20 comprises, for the first set, the subtracting S23 of the obtained common mask 132 from the respective preliminary binary segmentation mask 110, thereby obtaining the respective final binary segmentation mask $M_0^{ROI}$ 114 of the respective regions of interest for the first set. Similarly, the extracting S20 comprises, for the second set, the subtracting S23 of the obtained common mask 132 from the respective preliminary binary segmentation mask 120, thereby obtaining the respective final binary segmentation mask $M_1^{ROI}$ 124 of the respective regions of interest for the second set.

The figure also shows the assembling S30 of the extracted respective regions of interest $M_0^{ROI}$ 114 and $M_1^{ROI}$ 124 into the single set of images. In particular, the figure shows the result of the assembling for the layers 110 and 120. The result of the assembling is the image 130. In this example, the method also comprises the assembling of the obtained common mask 132 with the extracted respective regions of interest $M_0^{ROI}$ 114 and $M_1^{ROI}$ 124. The extracted respective regions of interest $M_0^{ROI}$ 114 obtained for the first set contains the arteries, the extracted respective regions of interest $M_1^{ROI}$ 124 obtained for the second set contains the urinary tracts and the common mask 132 contains the bones. The method therefore allows the single rendering of all these body parts. In this example, the method uses the said first assigning method. For each voxel of the single set 130, the value that is assigned to the voxel is the respective label associated to the set of medical images having the respective region of interest to which the voxel belongs (e.g., "0" or "1" in this example). The method also comprises assigning another label for all the voxel that belong to the common mask 132. The method then allows the rendering of these values by applying a volume rendering algorithm for highlighting the regions of interest of the different sets of medical images.

FIG. 5 illustrates an example of flowchart of the method. By following this flowchart, the method enables a single visualization of different phases CT-scan.

The method comprises the obtaining S10 of several CT-Scan sets of medical images $V_k$ (hereinafter also referred to as series) with $k \in \{0, ..., \#series\}$ from different phases. In this example, the method considers $V_0$ as the reference series, and the assembling S30 comprises adding in this reference series $V_0$ the ROIs (i.e., the respective regions of interest) from the other series.

The method comprises the registering (i.e., the alignment) of all these series in order to be comparable. After the registration, the method comprises the computing of the merged series which will be used to generate the volume rendering, and which will be visualized. The computing of the merged series comprises the extracting S20 of the respective regions of interest of each series and the assembling S30 of the extracted respective regions of interest into a single set of medical images.

FIG. 6 illustrates an example of flowchart of the extracting S20 of the respective regions of interest of each series and the assembling S30 of the extracted respective regions of interest into a single set of medical images.

The extracting S20 comprises the segmenting S21 of the sets, thereby generating the preliminary binary segmentation masks $M_k^{ROI+Common}$ 210 which contain the ROIs and undistinguishable (i.e., common) regions for each series. For doing that, the method comprises defining a range which contains the HU value of the ROI (for instance HU values superior to 300 HU). The defined value may depend on the concentration and type of contrast agent. With this range of values, the method comprises capturing contrasted regions (ROI) and bones (undistinguishable regions). For even smoother results, the method may comprise applying to the result of the segmenting S21 regularization filters such as binary morphological opening or closing.

Then, the method comprises the computing S22 the intersection between all previously computed masks to get a mask of common regions (which are the undistinguishable regions). The computing S22 of the intersection is performed based on the following formula.

$$M^{Common} = \prod_{k \in \{0,\ldots,\#series-1\}} M_k^{ROI+Common}$$

wherein $M^{Common}$ is the common mask and, for each set of medical images labelled $k$ among the set of labels {0, ... , *#series* - 1}, $M_k^{ROI+Common}$ is the generated respective preliminary binary segmentation mask.

These are common regions that have HU values in the range defined above in all of the input CT-scan series (for example bones). Consequently, these common regions do not include anatomical structures that have been enhanced by the contrast agent since the enhanced anatomical structures are not the same across the series of a multiphase CT-scan exam (as illustrated in the example of FIG. 4).

Therefore, the method comprises the computing of the respective final binary segmentation masks $M_k^{ROI}$ which contain only the ROI regions of each series as the difference S23 between the common mask and the (ROI + undistinguishable regions) preliminary binary segmentation masks. The computing of the difference S23 is based on the following formula:

$$\forall\, k \in \{0, \ldots, \#series\}, \qquad M_k^{ROI} = M_k^{ROI+Common} \times (1 - M^{Common})$$

wherein $M^{Common}$ is the common mask and, for each set of medical images labelled $k$ among the set of labels {0, ..., *#series*}, $M_k^{ROI+Common}$ is the generated respective preliminary binary segmentation mask and $M_k^{ROI}$ is the obtained respective final binary segmentation mask.

The method comprises defining an offset t, for instance t = 5000 HU, superior to the amplitude of HU values of all the series of the multiphase exam.

Finally, the method comprises the assembling S30 by creating the fusion series $V^{fusion}$ based on the reference series. The creating of the fusion series may be based on the following algorithm:

- If a voxel ($x$, $y$, $z$) does not belong to any ROI other than the one of the reference series i.e. $\forall k \in$ {1, ... , *#series*}, $M_k^{ROI}(x,y,z) = 0$, then it receives the HU value of its corresponding voxel in the reference series : $V^{fusion}(x, y, z) = V_0(x, y, z)$.
- Otherwise, if the voxel ($x$, $y$, $z$) belongs to the ROI of a series $k > 0$, then either:
  - ◦ $V^{fusion}(x, y, z) = V_k(x, y, z)$. In that case, the method comprises rendering $V^{fusion}$ with a regular transfer function for CT-Scan. This second assigning method is referred to as the blended mode (see FIG. 7).
  - ◦ Or $V^{fusion}(x, y, z) = V_k(x, y, z) + kt$. This enables to generate a volume rendering where the ROIs of the different series appear with distinctive colors thanks to an adapted piecewise transfer function (see FIG. 8). This third assigning method is referred to as the distinctive mode.

In summary, using $\delta_{distinctive} = 1$ for the distinctive mode and 0 for the blended mode, the assembling S30 may be based on the following formula:

$$V^{fusion} = V_0 \prod_{k=0}^{\#series} 1 - M_k^{ROI} + \sum_{k=0}^{\#series} M_k^{ROI}(V_k + \delta_{distinctive} kt)$$

wherein $V^{fusion}$ is the single set of images, $V_k$ is the set of medical images labelled $k$ among the set of labels {0, ... , *#series* - 1}, $V_0$ is a reference set of medical images in which the regions of interest from other sets of medical images are added, $M_k^{ROI}$ is the respective final binary segmentation mask of regions of interest for the set of medical images labelled $k$ among the set of labels {0, ... , *#series* - 1}.

FIG. 7 shows a first example of single rendering. In this example, the method generates a blended fusion volume rendering of arterial and late phases. The method keeps the ROI from both of the phases. The method allows the rendering of the urinary tract from the late phase and the artery tract from the arterial phase in one visualization.

FIG. 7 shows a second example of single rendering. In this example, the method generates a distinctive fusion

volume rendering of arterial and late phases. The method allows highlighting the ROI of the late phase in a different color. In this example, urinary tract 310 is shown in a first color while the rest of the volume is in another color. The figure shows that the method allows keeping shades in urinary tract 310.

After the computation of the fusion series, the method may comprise defining an appropriate transfer function (see the examples of FIG. 9, 10 and 11), which enhances each ROI extracted from each series. FIG. 9 illustrates an example of transfer function that may be used by the method for the rendering of single set of images when the method uses the said second assigning method (i.e., the blended mode with $\delta_{distinctive} = 0$). FIGs. 10 and 11 illustrate an example of transfer function that may be used by the method for the rendering of single set of images when the method uses the said third assigning method (i.e., the distinctive mode with $\delta_{distinctive} = 1$).

Then, the method may comprise visualizing in 3D the CT-Scan by using a standard volume rendering algorithm with an appropriate transfer function depending on whether the user selected the blended or distinctive modes.

FIG. 12 shows an example of the system, wherein the system is a client computer system, *e.g.* a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

**1.** A computer-implemented method for single rendering at least two sets of medical images of a patient, the at least two sets of medical images covering an area of the patient, the method comprising:

- obtaining (S10) the at least two sets of medical images, each set of medical images covering one or more respective regions of interest;
- extracting (S20) the one or more respective regions of interest of each of the obtained at least two sets of medical images; and
- assembling (S30) the extracted respective regions of interest into a single set of images.

**2.** The method of claim 1, wherein the extracting (S20) comprises:

- segmenting (S21) the obtained at least two sets of medical images, thereby generating a respective preliminary binary segmentation mask for each set of medical images;
- computing (S22) an intersection between all the generated preliminary binary segmentation masks, thereby obtaining a common mask of one or more common regions of the obtained at least two sets of medical images; and
- for each set of medical images, subtracting (S23) the obtained common mask from the respective preliminary binary segmentation mask generated for the set of medical images, thereby obtaining a respective final binary segmentation mask of the one or more respective regions of interest for the set of medical images.

**3.** The method of claim 2, wherein the computing (S22) of the intersection is based on the following formula:

$$M^{Common} = \prod_{k\in\{0,\ldots,\#series-1\}} M_k^{ROI+Common}$$

wherein $M^{Common}$ is the common mask and, for each set of medical images labelled $k$ among the set of labels {0, ... , *#series* - 1}, $M_k^{ROI+Common}$ is the generated preliminary respective binary segmentation mask.

**4.** The method of claim 2 or 3, wherein the subtracting (S23) is based on the following formula:

$$\forall k \in \{0, \ldots, \#series - 1\}, \qquad M_k^{ROI} = M_k^{ROI+Common} \times (1 - M^{Common})$$

wherein $M^{Common}$ is the common mask and, for each set of medical images labelled $k$ among the set of labels {0, ... , *#series},* $M_k^{ROI+Common}$ is the generated respective preliminary binary segmentation mask and $M_k^{ROI}$ is the obtained respective final binary segmentation mask.

**5.** The method of any one of claims 1 to 4, wherein the single set of images defines a voxel grid, the assembling (S30) comprising assigning a respective value to each voxel of the voxel grid by performing, for each voxel:

- determining whether the voxel belongs to one of the respective regions of interest of one of the at least two sets of medical images; and
- if the voxel belongs to one of the respective region of interest, assigning a respective value to the voxel according to the set of medical images from which the respective mask having the respective region of interest to which the voxel belongs is obtained.

**6.** The method of claim 5, wherein the obtaining of the at least two sets of medical images further comprising obtaining a set of labels each corresponding to a respective set of medical images;
and wherein the assigning of the respective value comprising assigning the respective label associated to the set of medical images having the respective region of interest to which the voxel belongs.

**7.** The method of claim 5, wherein the assigning of the respective value comprises assigning the respective value equal to a value in a corresponding location of the set of medical images having the respective regions of interest to which the voxel belongs.

**8.** The method of claim 5, wherein the respective value assigned to the voxel is equal to the result of an addition of:

- a value in a corresponding location of the set of medical images having the respective regions of interest to which the voxel belongs; and
- an offset which depends on the set of medical images having the respective regions of interest to which the voxel belongs.

**9.** The method of claim 7 or 8, wherein the assembling is based on the following formula:

$$V^{fusion} = V_0 \prod_{k=0}^{\#series-1} 1 - M_k^{ROI} + \sum_{k=0}^{\#series-1} M_k^{ROI}(V_k + \delta_{distinctive} kt)$$

wherein $V^{fusion}$ is the single set of images, $V_k$ is the set of medical images labelled $k$ among the set of labels {0, ... , *#series* - 1}, $V_0$ is a reference set of medical images in which the regions of interest from other sets of medical images are added, **1** is an indicator function, $M_k^{ROI}$ is the respective final binary segmentation mask of regions of interest for the set of medical images labelled $k$ among the set of labels {0, ..., *#series* - 1}, $\delta_{distinctive}$ is a parameter equal to 1 for a distinctive mode and 0 for a blended mode, $kt$ is the offset resulting from the multiplying of the value of the label $k$ and a parameter $t$.

**10.** The method of any one of claims 1 to 9, the method further comprising, prior to the extracting:

- aligning the at least two sets of medical images, the extracting being performed on the aligned at least two sets of medical images.

**11.** The method of any one of claims 1 to 10, wherein the at least two sets of medical images include:

- at least one set of medical images acquired preferably by a CT-scanner at a non-enhanced phase;
- at least one set of medical images acquired preferably by the CT-scanner at arterial phase, the arterial phase being preferably from 25 to 50 seconds after injecting contrast material, preferably from 35 to 40 seconds after the injecting of the contrast material; and/or
- at least one set of medical images acquired preferably by the CT-scanner at portal venous phase, the portal venous phase being preferably from 60 to 90 seconds after injecting contrast material, preferably from 70 to 80 seconds after the injecting of the contrast material.

**12.** A computer program comprising instructions for performing the method of any of claims 1 to 11.

**13.** A computer readable storage medium having recorded thereon a computer program of claim 12.

**14.** A system comprising a processor coupled to a memory, the memory having recorded thereon the computer program of claim 12.

**15.** The system of claim 14, further comprising a viewer, the viewer comprising a graphical user interface configured for displaying the single set of images.

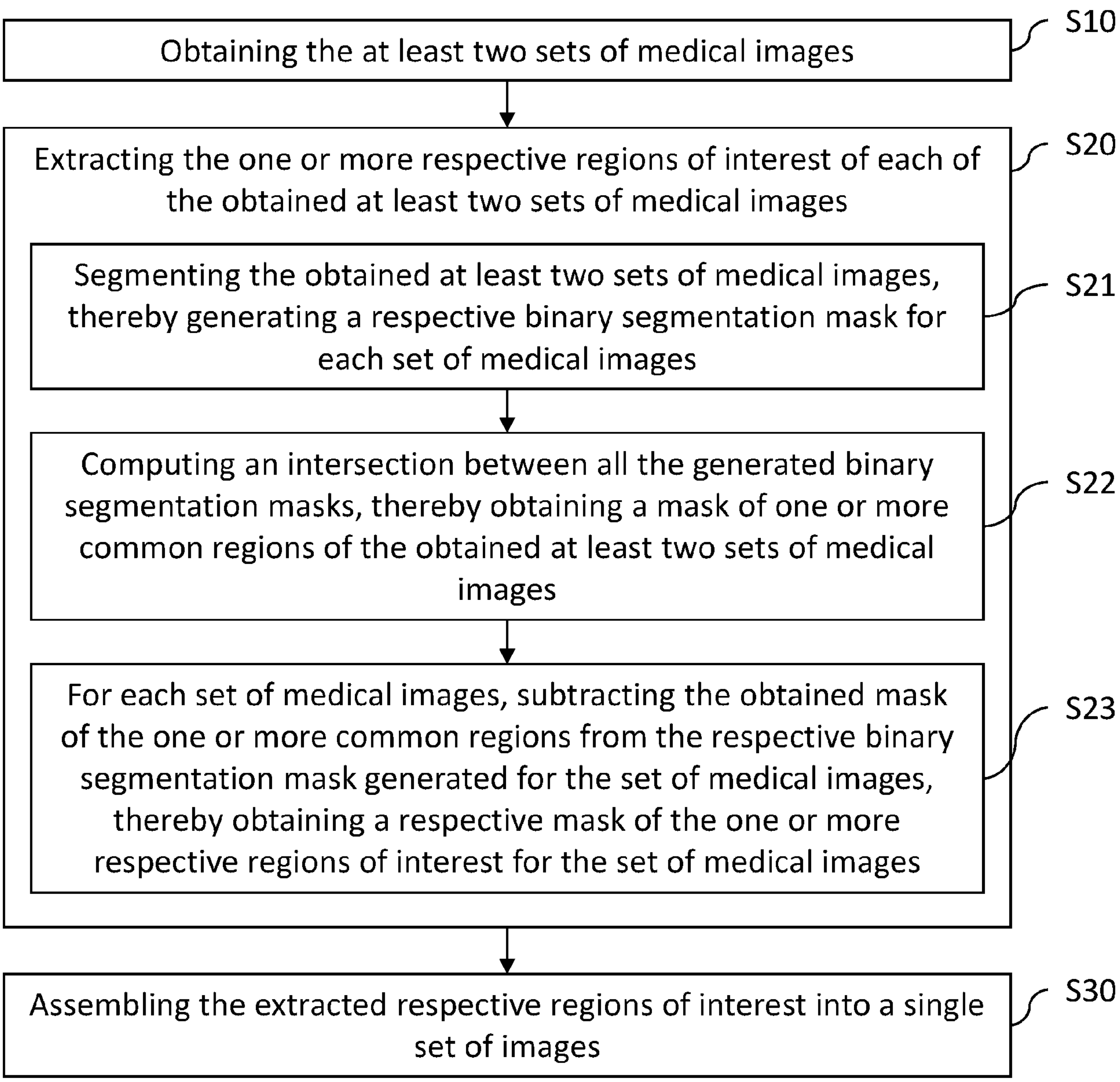
Obtaining the at least two sets of medical images
S10
Extracting the one or more respective regions of interest of each of the obtained at least two sets of medical images
S20
Segmenting the obtained at least two sets of medical images, thereby generating a respective binary segmentation mask for each set of medical images
S21
Computing an intersection between all the generated binary segmentation masks, thereby obtaining a mask of one or more common regions of the obtained at least two sets of medical images
S22
For each set of medical images, subtracting the obtained mask of the one or more common regions from the respective binary segmentation mask generated for the set of medical images, thereby obtaining a respective mask of the one or more respective regions of interest for the set of medical images
S23
Assembling the extracted respective regions of interest into a single set of images
S30

FIG. 1

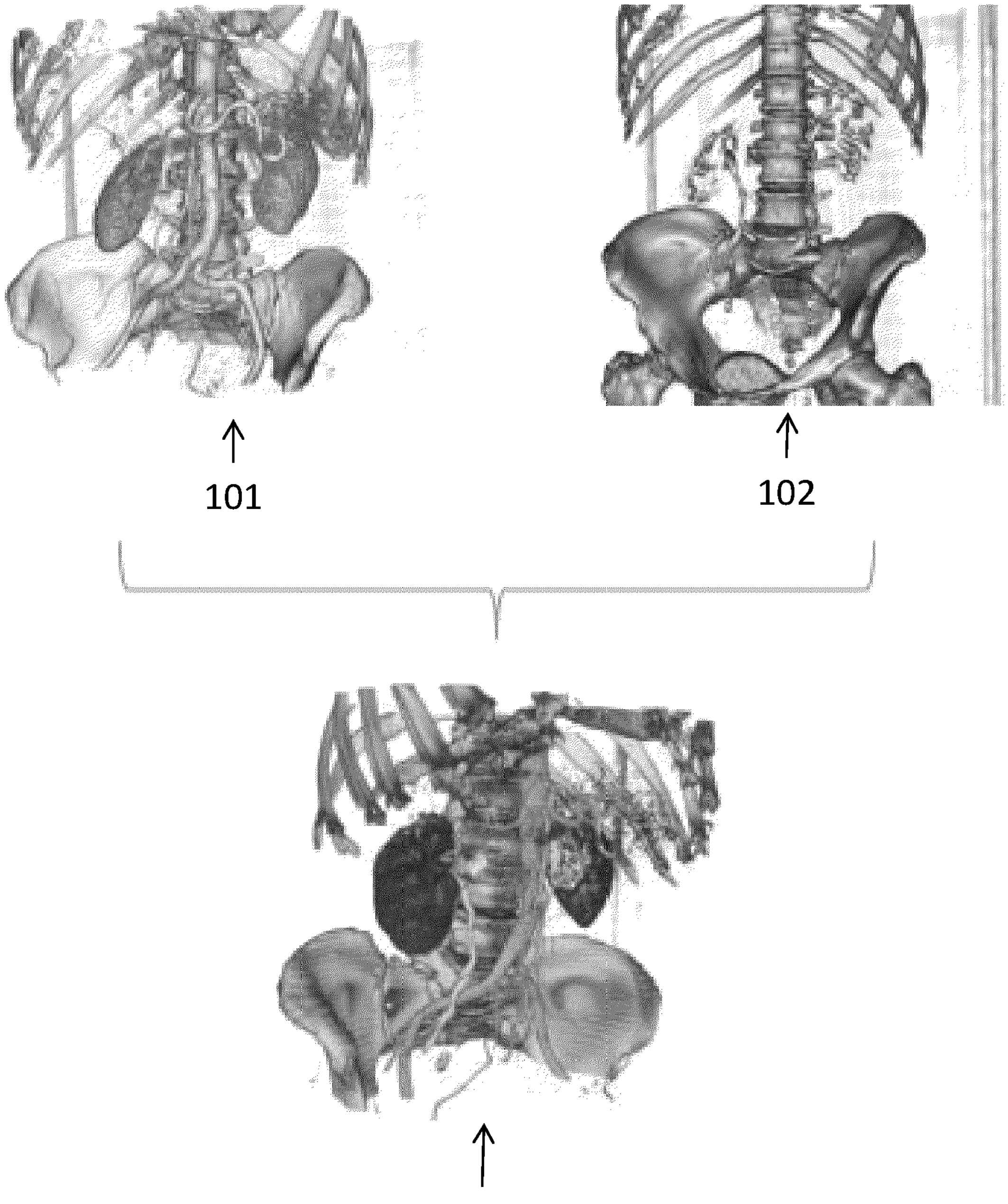


FIG. 2

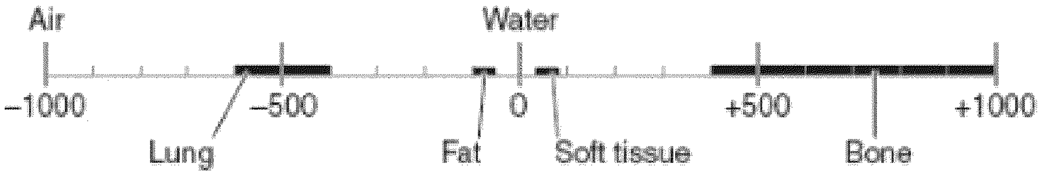


FIG. 3

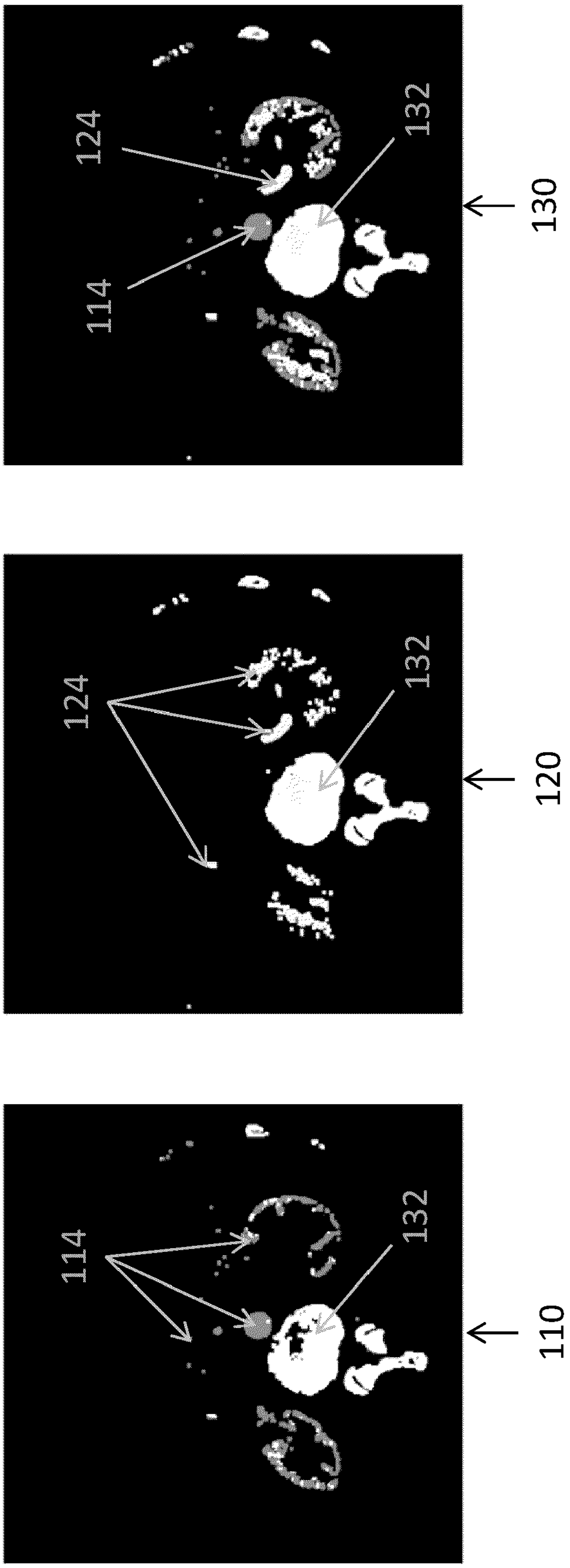


FIG. 4

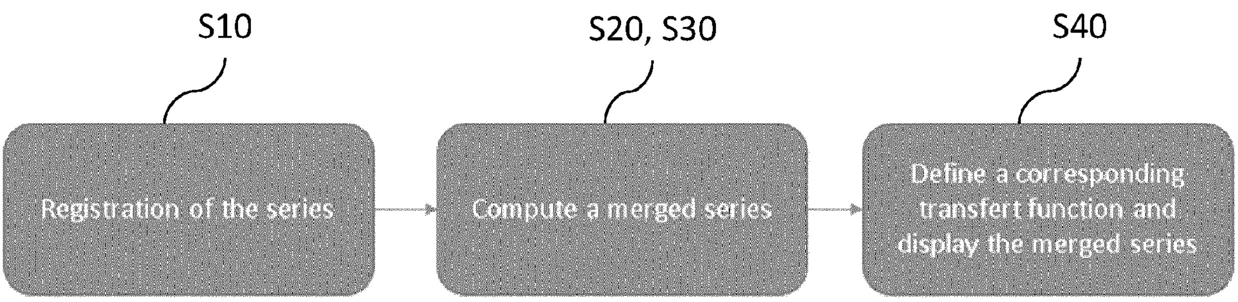
S10
S20, S30
S40
Registration of the series
Compute a merged series
Define a corresponding transfert function and display the merged series

FIG. 5

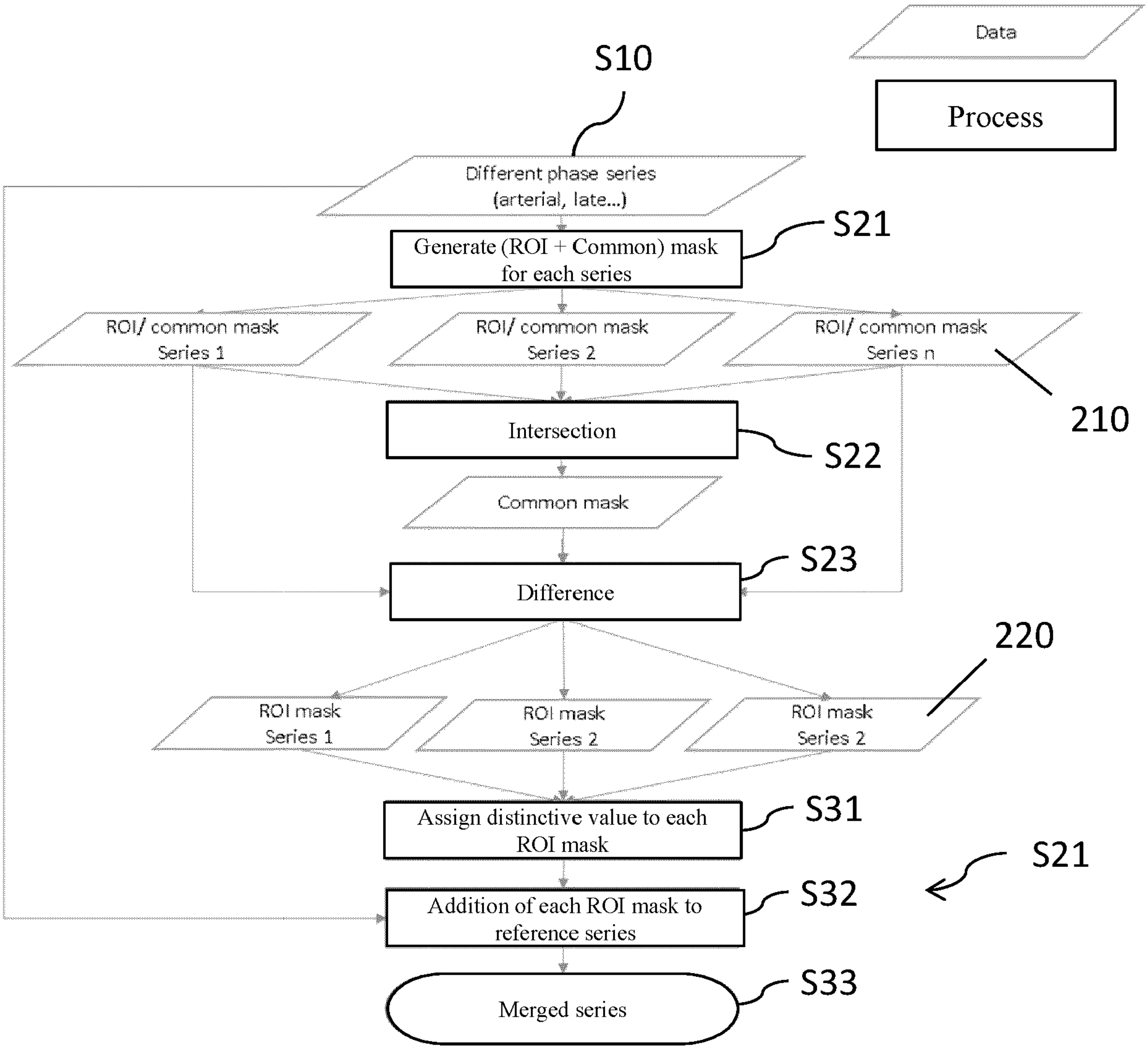
Data
Process
S10
Different phase series
(arterial, late...)
Generate (ROI + Common) mask
for each series
S21
ROI/ common mask
Series 1
ROI/ common mask
Series 2
ROI/ common mask
Series n
210
Intersection
S22
Common mask
S23
Difference
220
ROI mask
Series 1
ROI mask
Series 2
ROI mask
Series 2
Assign distinctive value to each
ROI mask
S31
S21
Addition of each ROI mask to
reference series
S32
Merged series
S33

FIG. 6

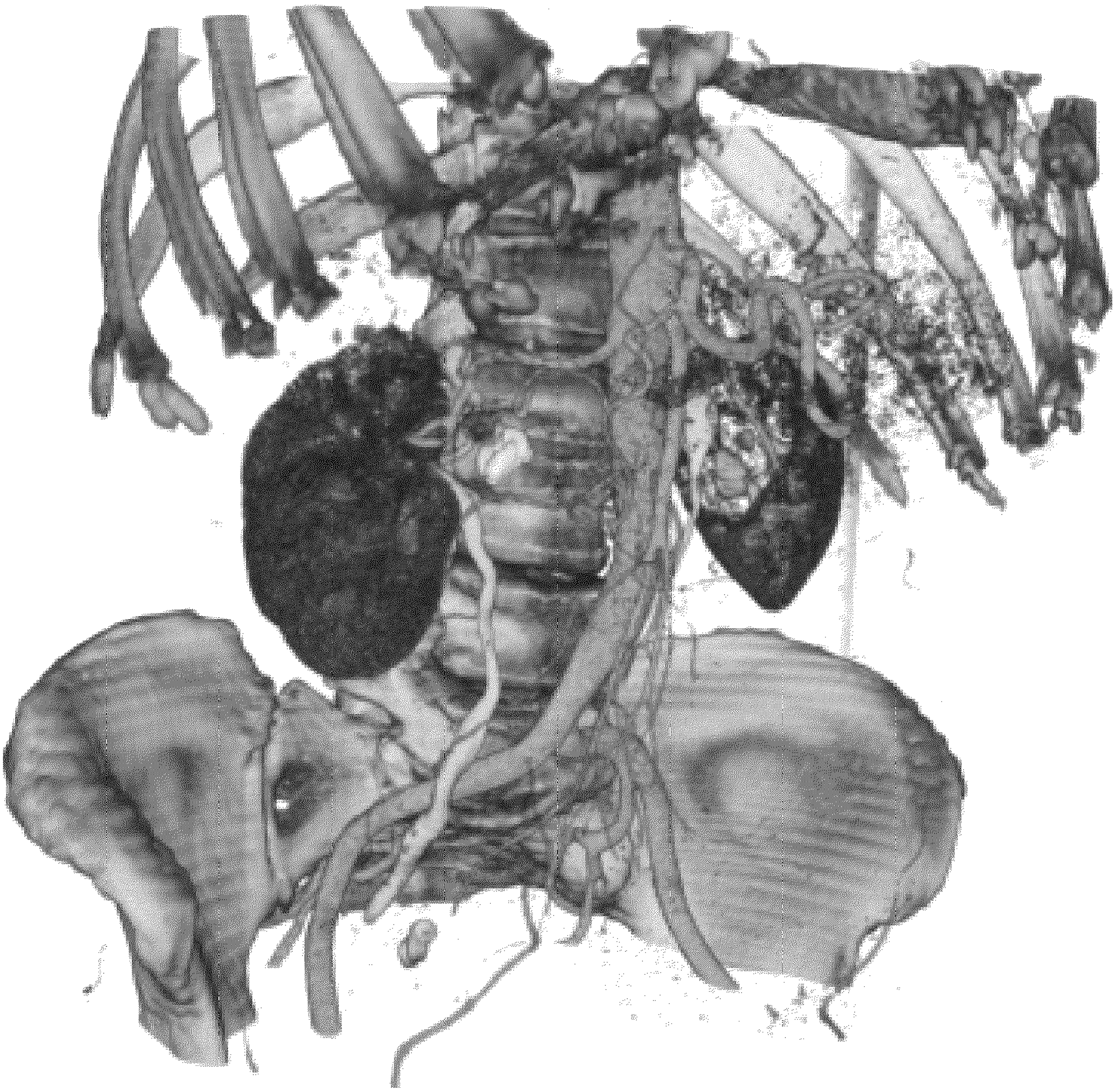

FIG. 7

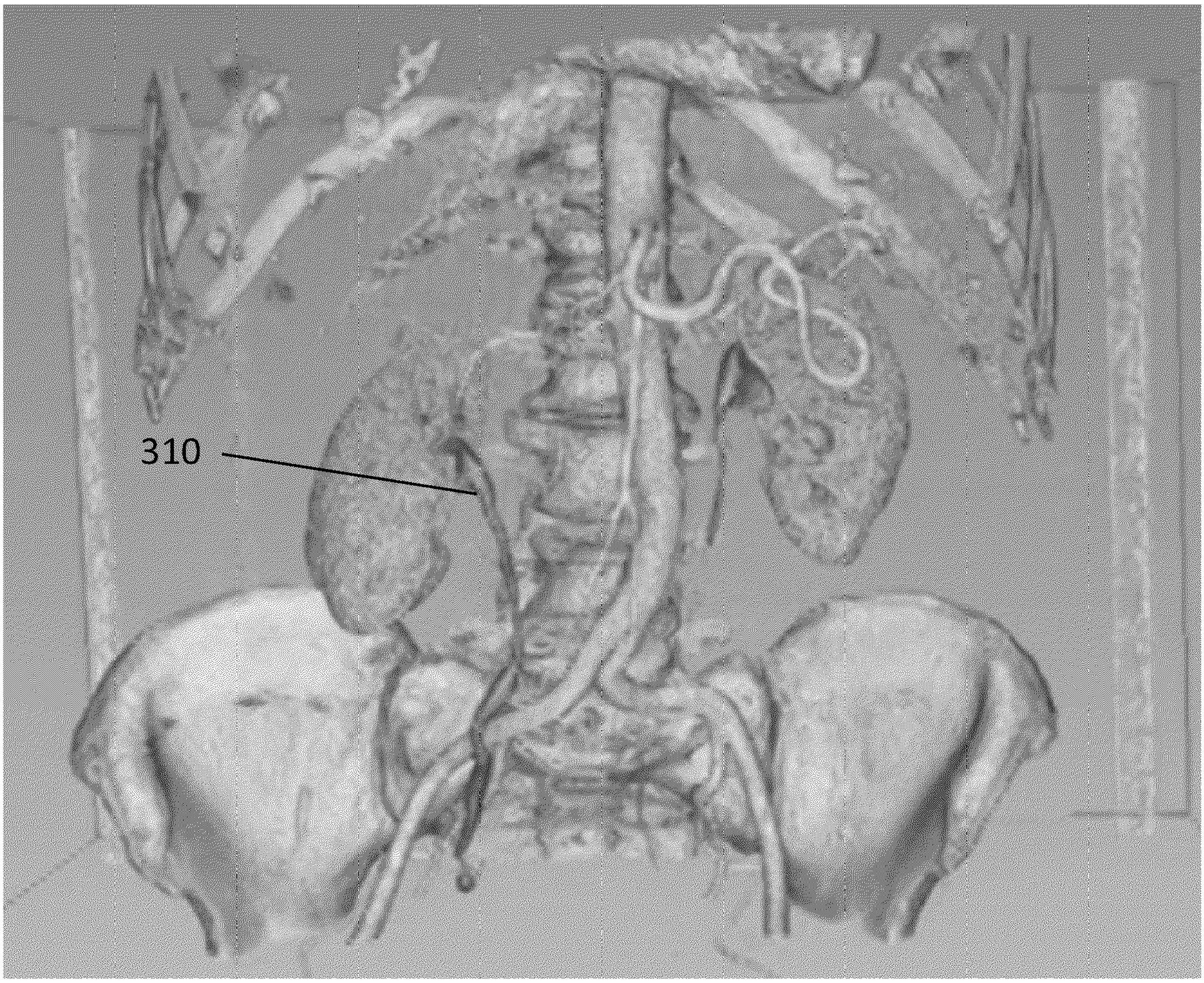


FIG. 8

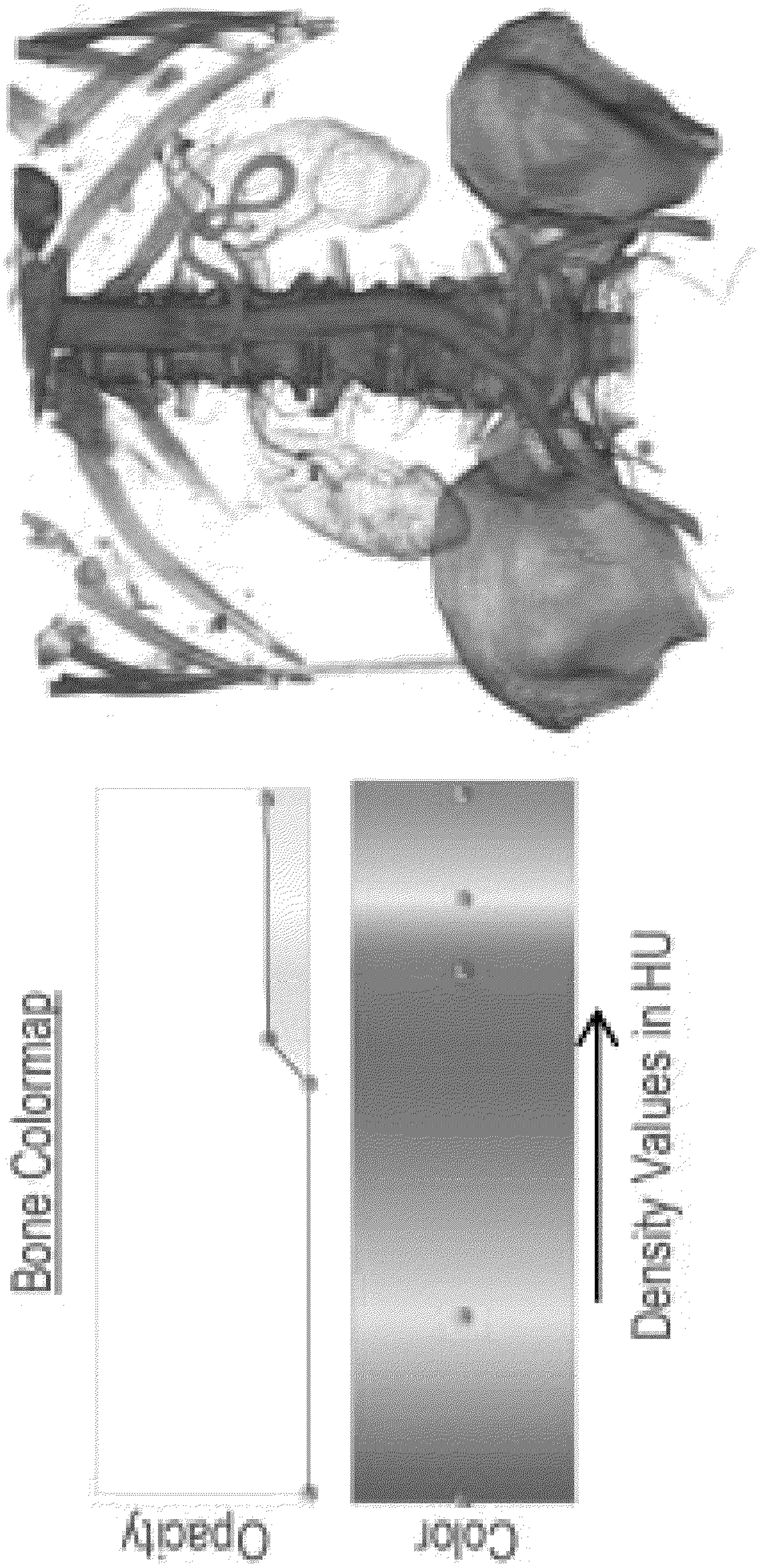


FIG. 9

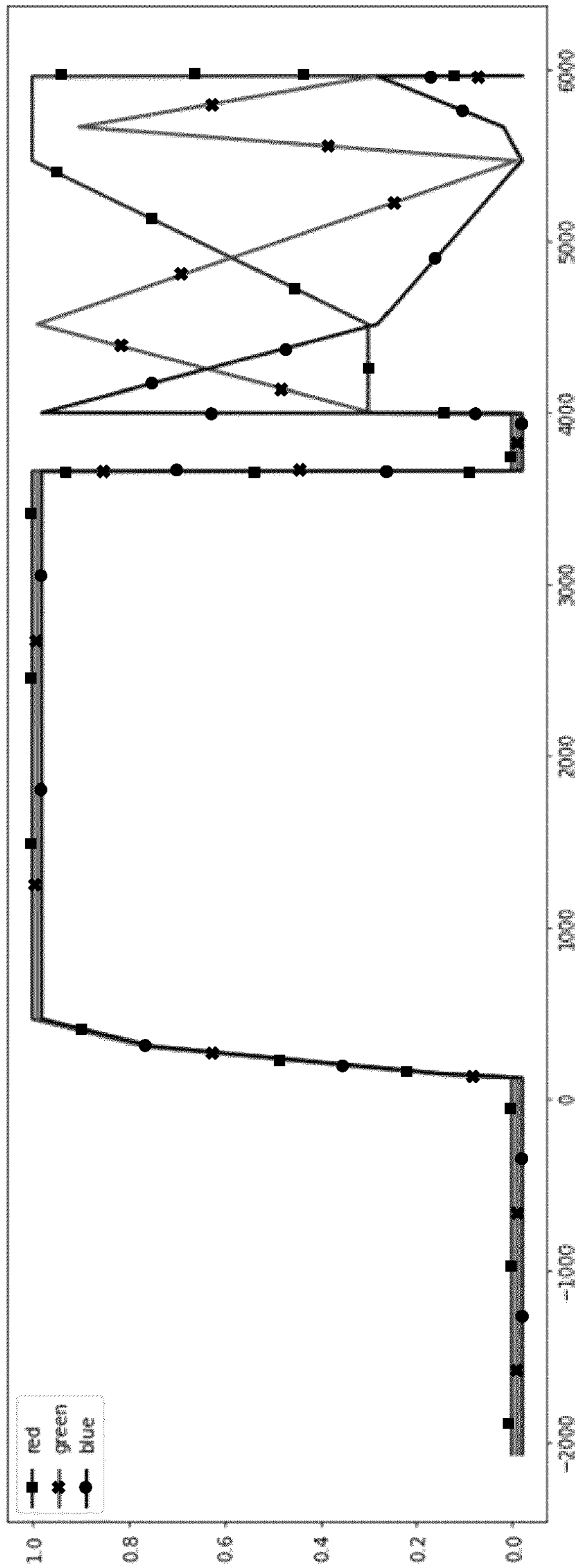
red
green
blue
1.0
0.8
0.6
0.4
0.2
0.0
−2000
−1000
0
1000
2000
3000
4000
5000
6000

FIG. 10

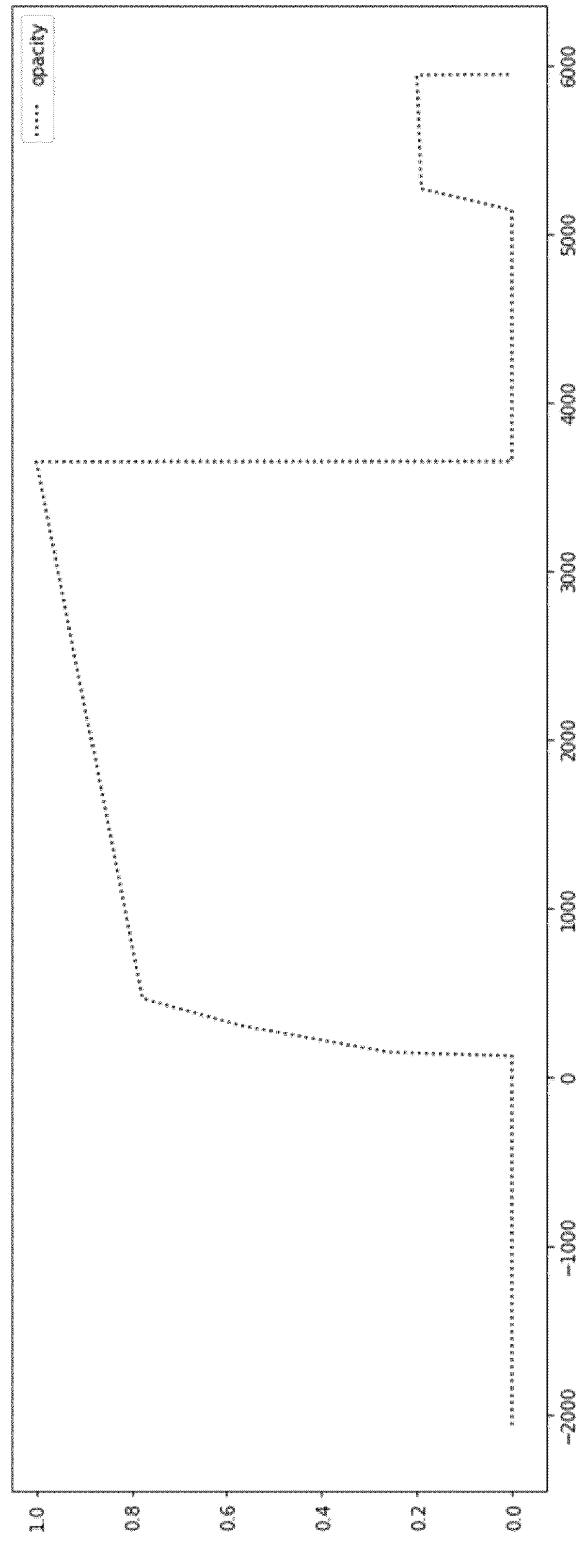
opacity
1.0
0.8
0.6
0.4
0.2
0.0
−2000
−1000
0
1000
2000
3000
4000
5000
6000

FIG. 11

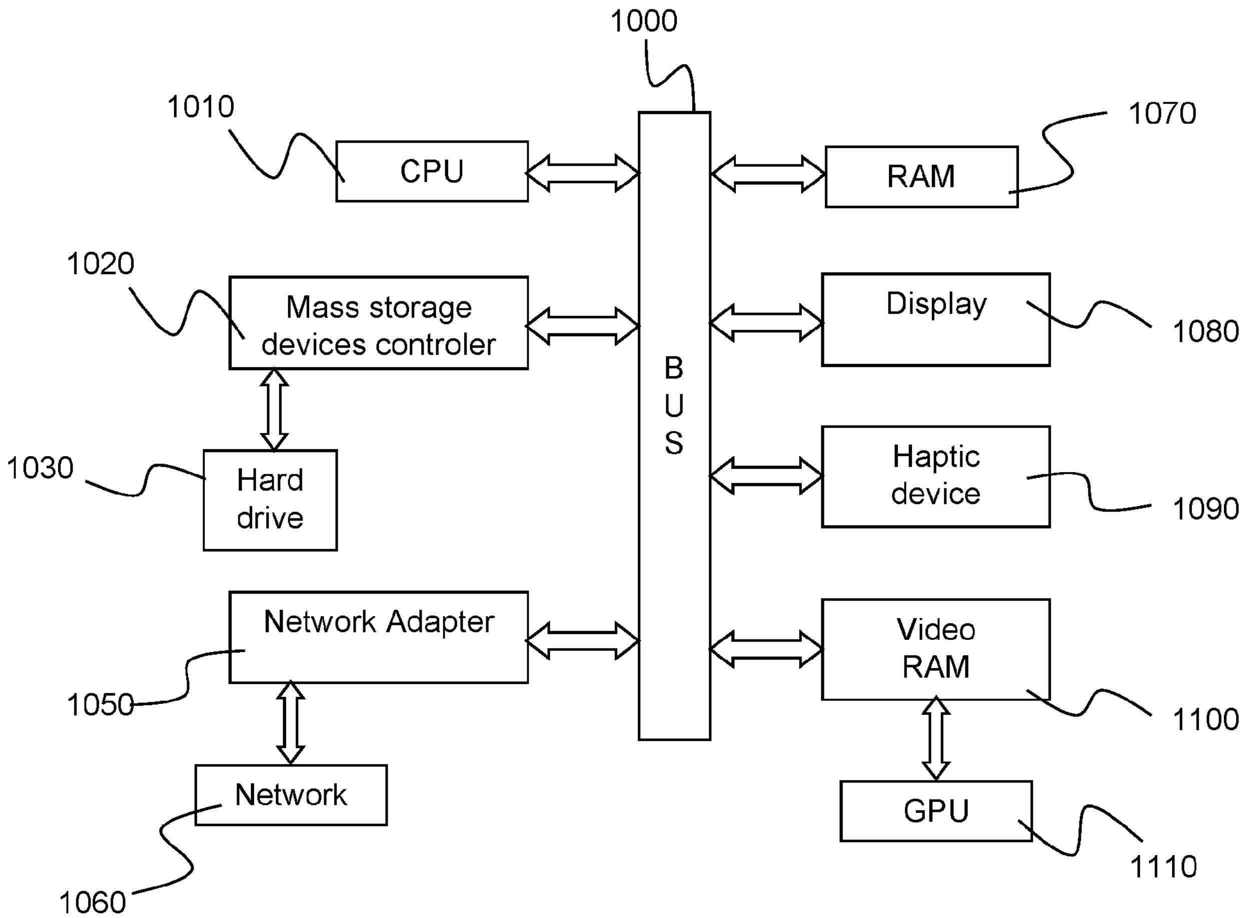
1000
1010
CPU
1070
RAM
1020
Mass storage devices controler
Display
1080
B U S
1030
Hard drive
Haptic device
1090
Network Adapter
Video RAM
1050
1100
Network
GPU
1110
1060

FIG. 12

Europäisches Patentamt
European Patent Office
Office européen des brevets

# EUROPEAN SEARCH REPORT

Application Number
EP 24 30 5151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 016250 A (PANASONIC HEALTHCARE HOLDINGS CO LTD) 1 February 2016 (2016-02-01) | 1-6, 10-15 | INV. G06T7/11 G06T15/08 |
| Y | * figures 4, 7-9 * | 7,8 | |
| A | * abstract * | 9 | |
| | * paragraph [0008] - paragraph [0034] * | | |
| | ----- | | |
| Y | Hedblom Anders: "Blood vessel segmentation for neck and head computed tomography angiography", MSc Thesis, 26 November 2013 (2013-11-26), XP093181832, Retrieved from the Internet: URL:https://www.diva-portal.org/smash/record.jsf?pid=diva2%3A667230&dswid=7533 [retrieved on 2024-07-03] * page 6, paragraph 1 * | 7,8 | |
| | ----- | | |

| TECHNICAL FIELDS SEARCHED (IPC) |
|---|
| G06T |

The present search report has been drawn up for all claims

1

| Place of search | Date of completion of the search | Examiner |
|---|---|---|
| Munich | 5 July 2024 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 5151

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2024

| Patent document cited in search report | Publication date | Patent family member(s) | Publication date |
|---|---|---|---|
| JP 2016016250 A | 01-02-2016 | JP 6393538 B2 | 19-09-2018 |
| | | JP 2016016250 A | 01-02-2016 |

EPO FORM P0459

For more details about this annex : see Official Journal of the European Patent Office, No. 12/82